# EUROPEAN PATENT SPECIFICATION

(11) **EP 3 112 713 B1**
(45) Date of publication and mention of the grant of the patent: **29.08.2018**
(21) Application number: 15754423.0
(22) Date of filing: 26.02.2015
(51) Int. Cl.: F16C 37/00, B23B 19/02, B23Q 11/12, H02K 9/19

(54) **MAIN SHAFT DEVICE**
HAUPTWELLENVORRICHTUNG
DISPOSITIF D'ARBRE PRINCIPAL

(30) Priority: 28.02.2014 JP 2014039263; 28.02.2014 JP 2014039264; 27.08.2014 JP 2014173223; 27.08.2014 JP 2014173224
(43) Date of publication of application: 04.01.2017
(73) Proprietor: NSK Ltd., Tokyo 141-8560 (JP)
(72) Inventor: OGURI, Shoichiro, Fujisawa-shi Kanagawa 251-8501 (JP); KATSUNO, Yoshiaki, Fujisawa-shi Kanagawa 251-8501 (JP)
(74) Representative: Grünecker Patent- und Rechtsanwälte PartG mbB
(86) International application number: PCT/JP2015/055699
(87) International publication number: WO 2015/129826

(56) References cited:
- JP-A- S61 121 802
- JP-A- 2004 249 439
- JP-A- 2007 245 286
- JP-A- 2007 245 286
- JP-A- 2009 133 483
- JP-A- 2009 133 483
- JP-A- 2010 221 360
- JP-A- 2013 022 674
- US-A1- 2011 142 386
- US-A1- 2011 142 386
- US-B2- 7 322 103

## Description

The invention relates to a main spindle apparatus according to the preamble of claim 1. Such a main spindle apparatus is known form JP S61121802 A. More specifically, the invention relates to a main spindle apparatus of a high-speed rotary machine such as a machine tool main spindle, a high-speed motor, a centrifugal machine or a turbo refrigerator.

### BACKGROUND ART

Speedup of a machine tool main spindle has been developed remarkably and, as a lubricating method for enabling speedup of the main spindle, there is employed oil air lubrication or oil mist lubrication. Also, as other lubrication methods, from viewpoints of environmental protection, grease lubrication not discharging lubricating oil to the outside is reviewed and is employed together with a rolling bearing using a light ceramic rolling element (for example, silicon nitride) providing excellent seizure resistance in high speed rotation.

Also, as a method for driving a high-speed rotation main spindle, there is generally used a so called motor built-in main spindle with a motor built in a main spindle rather than gear driving, belt driving or direct driving using a coupling.

In the thus structured high-speed main spindle, in addition to generation of heat from a rolling bearing supporting the main spindle, the built-in motor (stator and rotor) also generates heat in large quantities. In the machine tool main spindle, when the temperature rise of the main spindle is high, the main spindle is thermally deformed to lower the working precision thereof. Therefore, in order to suppress the temperature rise of the main spindle, there is used a method for charging cooling oil into a housing serving as a main spindle metal pipe from outside. Since the deformation of the main spindle due to thermal expansion occurs in the axial direction with a front bearing providing a fixed side as the original point thereof, mostly, the outer peripheries of the front bearing serving as the fixed side and the stator of the motor are cooled.

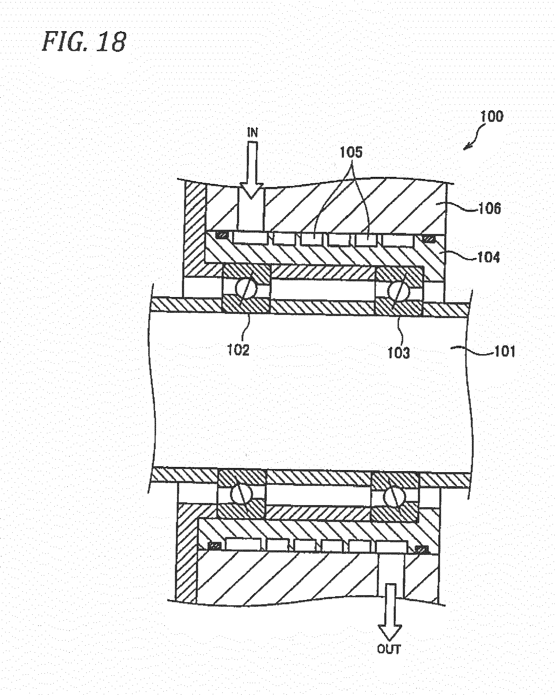

For example, in a conventional cooling apparatus 100 for suppressing generation of heat from the front bearing, as shown in Fig. 18, there are formed circumferential grooves 105 in the outer peripheral surface of a front housing 104 into which a pair of front bearings 102, 103 supporting the front side of a main shaft 101 are internally engaged. And, a cooling medium is circulated between the outer peripheral surface of the front housing 104 and the inner peripheral surface of the other housing 106, thereby cooling the front bearings 102, 103.

Also, the patent document 1 discloses, for use in a machine tool, a spindle cooling apparatus which includes a cooling medium passage formed in an inner ring spacer interposed between front and rear bearings and pressure feeds a cooling medium from a pump or the like to thereby cool the inner ring spacer.

Meanwhile, as the rear bearing serving as a free side bearing, there is often used a bearing (for example, a bearing having a bearing inside diameter dimension about φ10 ∼ φ30mm smaller than the fixed side bearing) slightly smaller in size than the front bearing. Thus, the dmn value of the bearing is reduced and, accordingly, the temperature rise reduces. Also, the rear bearing serves as a free side bearing, and the thermal deformation of the main spindle rear part has a smaller influence on the working precision than the front bearing (for example, supposing a rotation shaft expands in the axial direction relative to a non-rotary part, even when the main spindle rear side slidingly moves backward, the main spindle front side is hard to shift). For these reasons, in most cases, to the rear bearing, there is not added a cooling structure which provides a complicated structure.

### RELATED ART REFERENCE

### PATENT DOCUMENT

Patent Document: JP-A-H04-133555

### SUMMARY OF THE INVENTION

### PROBLEMS TO BE SOLVED BY THE INVENTION

In the recent high-speed main spindles, there has been increasing a type in which the dmn value of a bearing used is a million or more, or more than a million and five hundred thousand, or two millions or more; and, accordingly, the dmn value of a rear bearing also increases, thereby increasing heat generation. In the case that heat generation of the rear bearing is large, since the internal temperature of the bearing rises, the viscosity of lubricating oil lowers, thereby raising a fear that seizure can be generated due to poor oil film formation in a rolling contact portion or the like.

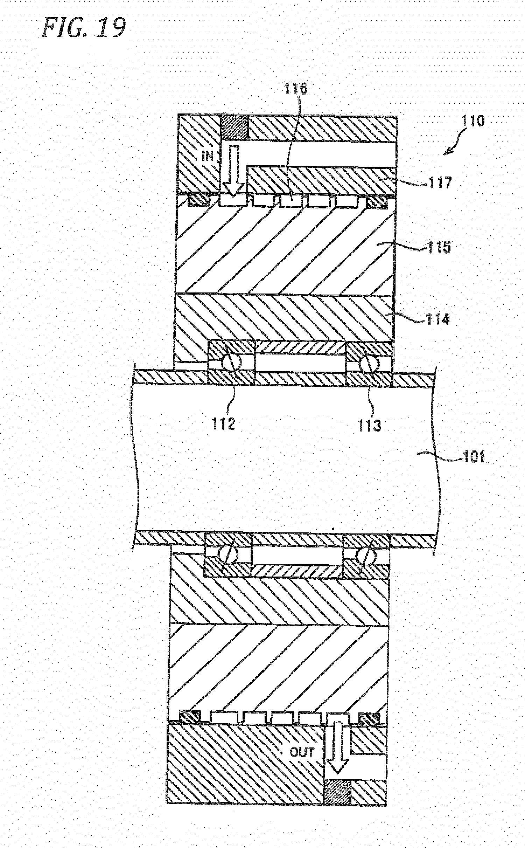

Therefore, in a cooling apparatus 110 shown in Fig. 19, while simplifying a peripheral structure, the rear bearing may be cooled. In this case, a sleeve 114, with which a pair of free side bearings 112, 113 supporting the rear side of a main shaft 101 are internally engaged, is internally engaged with a rear housing 115; and, in the outer peripheral surface of the rear housing 115, there is formed a circumferential groove 116. And, a cooling medium is circulates between the outer peripheral surface of the rear housing 115 and the inner peripheral surface of the other housing 117, thereby cooling the free side bearings 112, 113.

However, in the structure shown in Fig. 19, a cooling part is arranged at a position spaced in the radial direction from a heat generating part (bearings 112, 113), and heat transmission efficiency between the loose-engaged sleeve 114 and rear housing 115 is low, thereby resulting in low cooling efficiency. Therefore, although the rear housing is cooled, the sleeve is not cooled with good efficiency to reduce a clearance between the rear housing and sleeve, thereby raising a fear of occurrence of poor slide. Thus, there is a possibility that heat expansion between the front bearing (fixed side bearing) and rear bearing (free side bearing) can generate a thrust load, thereby applying an excessive load to the bearings to damage them. Or, a pre-load loss can occur, thereby causing strange sounds or abnormal vibrations.

The invention is made in view of the above problems and thus has an object to provide a main spindle apparatus which can suppress a temperature rise caused by heat generation from a rear bearing with high efficiency and thus can extend the life of the rear bearing, that is, can extend the life of the main spindle apparatus and also can enhance working precision.

### MEANS FOR SOLVING THE PROBLEMS

The object of the invention can be attained by the following structures.
(1) A main spindle apparatus, including:
   a housing;
   a rotation shaft rotatable relative to the housing;
   a fixed side bearing having an inner ring externally engaged with one end side of the rotation shaft and an outer ring fixed to the housing;
   a sleeve arranged within the housing on the other end side of the rotation shaft and movable in the axial direction of the rotation shaft; and
   a free side bearing having an inner ring externally engaged with the other end side of the rotation shaft and an outer ring internally engaged with the sleeve, wherein:
      a cooling passage, allowing a cooling medium to flow therethrough, is formed between the outer peripheral surface of the sleeve and the inner peripheral surface of the housing, the outer and inner peripheral surfaces being opposed to each other;
      the cooling passage is constituted of a streak of a spiral groove formed in such portion of the outer peripheral surface of the sleeve as extends from the axial-direction one end side of the sleeve to the other end side thereof; and
      the housing includes a supply port communicating with one end of the spiral groove configured to receive the cooling medium and a discharge port communicating with the other end of the spiral groove configured to discharge therefrom the cooling medium having flown through the cooling passage.
(2) A main spindle apparatus, including:
   a housing;
   a rotation shaft rotatable relative to the housing;
   a fixed side bearing having an inner ring externally engaged with one end side of the rotation shaft and an outer ring fixed to the housing;
   a sleeve arranged within the housing on the other end side of the rotation shaft and movable in the axial direction of the rotation shaft; and
   a free side bearing having an inner ring externally engaged with the other end side of the rotation shaft and an outer ring internally engaged with the sleeve, wherein:
      a cooling passage, allowing a cooling medium to flow therethrough, is formed between the outer peripheral surface of the sleeve and the inner peripheral surface of the housing, the outer and inner peripheral surfaces being opposed to each other;
      the cooling passage is constituted of multiple streaks of spiral grooves formed in such portion of the outer peripheral surface of the sleeve as extends from the axial-direction one end side of the sleeve to the other end side thereof; and
      the housing includes multiple supply ports respectively communicating with one-side ends of their associated spiral grooves configured to receive their associated cooling mediums and multiple discharge ports respectively communicating with the other-side ends of their associated spiral grooves configured to discharge therefrom the cooling mediums having flown through the spiral grooves.
(3) The main spindle apparatus according to (2), wherein
   the multiple streaks of spiral grooves are arranged such that the one-end sides and the other-end sides thereof are arranged different in phase from each other by an angle of 45° or less in the peripheral direction of the outer peripheral surface of the sleeve.
(4) The main spindle apparatus according to any one of (1) to (3), wherein
   an annular elastic member, configured to seal liquid tight between the outer peripheral surface of the sleeve and the inner peripheral surface of the housing, is arranged on the axial-direction two sides of the cooling passage.
(5) The main spindle apparatus according to any one of (1) to (4), wherein
   chamfer parts are formed in the two end edges of the outer peripheral surface of the sleeve opposed to the inner peripheral surface of the housing, or in the two end edges of the inner peripheral surface of the housing.
(6) The main spindle apparatus according to any one of (1) to (5), wherein
   the side wall surface of the spiral groove is inclined relative to a direction perpendicular to the above axial direction.
(7) The main spindle apparatus according to any one of (1) to (6), wherein
   the spiral groove is arranged such that one end and the other end thereof are shifted 180° in phase from each other in the peripheral direction of the outer peripheral surface of the sleeve.

### ADVANTAGES OF THE INVENTION

According to the main spindle apparatus of the invention, between the mutually opposed sleeve outer peripheral surface and housing inner peripheral surface, there is formed a cooling passage through which the cooling medium can flow. The cooling passage is constituted of a streak of spiral groove formed in such portion of the outer peripheral surface of the bearing sleeve as extends from the axial-direction one end side of the sleeve to the other end side thereof. The housing includes a supply port communicating with one end of the spiral groove and capable of receiving a cooling medium and a discharge port communicating with the other end of the spiral groove and capable of discharging the cooling medium therefrom. Thus, the sleeve to be internally engaged by the bearing can be cooled directly and thus the free side bearing can be cooled with high efficiency. Also, since the internal temperature of the bearing lowers, lubrication oil film cutting due to the lowered viscosity in the rolling contact part and cage guide surface during rotation is made hard to occur, thereby preventing the reduced life and bearing seizure due to poor lubrication. And, since the housing and sleeve are cooled simultaneously, the radial-direction shrinkage amounts of these two members are made uniform to prevent the slide part clearance (clearance between the housing and sleeve) against reduction, whereby occurrence of sliding troubles due to short clearance can be prevented. Further, the flow of the cooling medium within the spiral groove can be made smooth, thereby enabling uniform cooling of the whole sleeve and preventing occurrence of deformation distortion due to cooling. As a result, the internally engaged bearing is prevented against distortion, the rotation precision of the main spindle can be maintained at high level, and the working precision of the main spindle can be enhanced,

Also, according to the main spindle apparatus of the invention, the cooling passage is constituted of multiple streaks of spiral grooves formed in such portion of the outer peripheral surface of the sleeve as extends from the axial-direction one end side of the sleeve to the other end side thereof. The housing includes multiple supply ports respectively communicating with the one-side ends of their associated spiral grooves and capable of receiving the cooling medium and multiple discharge ports respectively communicating with the other-side ends of their associated spiral grooves and capable of discharging the cooling medium therefrom. Thus, the sleeve to be internally fitted by the bearing can be cooled directly, thereby enabling high-efficiency cooling of the free side bearings. Also, since the cooling medium is supplied and discharged with respect to the multiple spiral grooves independently of each other, the cooling control precision of the sleeve or free side bearing can be enhanced. Thus, the internal temperature of the bearing is lowered and lubricating oil cutting due to the lowered viscosity in the rolling contact part and cage guide surface during rotation is made hard to occur, thereby preventing the reduced life and bearing seizure due to poor lubrication.

### BRIEF DESCRIPTION OF THE DRAWINGS

Fig. 1 is a section view of the whole structure of a main spindle apparatus according to a first structure of the invention.
Fig. 2 is an enlarged section view of the neighborhood of a free side bearing shown in Fig. 1.
Fig. 3 is a partial section view of the outer peripheral surface of a bearing sleeve in order to explain a spiral groove, corresponding to Fig. 2.
Fig. 4 is a partial section view of the outer peripheral surface of the bearing sleeve when viewed from the A direction of Fig. 2.
Fig. 5 is a section view of the spiral groove.
Fig. 6A is a section view of a spiral groove according to a modification.
Fig. 6B is a section view of a spiral groove according to a modification.
Fig. 6C is a section view of a spiral groove according to a modification.
Fig. 7 is a partial section view of a bearing sleeve including two chamfer parts respectively formed in the two end edges of the outer peripheral surface thereof.
Fig. 8 is a partial section view of a bearing sleeve including two chamfer parts respectively formed in the shoulder parts of the spiral groove.
Fig. 9 is a section view of the whole structure of a main spindle apparatus according to a second structure example of the invention.
Fig. 10 is an enlarged section view of the neighborhood of a free side bearing shown in Fig. 9.
Fig. 11 is a partial section view of the outer peripheral surface of a bearing sleeve in order to explain a spiral groove, corresponding to Fig. 10.
Fig. 12 is an arrow view in the B direction of Fig. 9.
Fig. 13 is a partial section view of the outer peripheral surface of the bearing sleeve when viewed from the C direction of Fig. 10.
Fig. 14 is a partial section view of a bearing sleeve including two chamfer parts respectively formed in the two end edges of the outer peripheral surface thereof.
Fig. 15 is a partial section view of a bearing sleeve including two chamfer parts respectively formed in the shoulder parts of the spiral groove.
Fig. 16 is a graph to show compared temperature rises obtained in different cooling structures of the free side bearings according to the first structure example.
Fig. 17 is a graph to show compared temperature rises obtained in different cooling structures of the free side bearings according to the second structure.
Fig. 18 is a section view of the structure of a conventional fixed side bearing.
Fig. 19 is a section view of the structure of a conventional free side bearing.

### MODES FOR CARRYING OUT THE INVENTION

Description is given below specifically of an embodiment of a main spindle apparatus according to the invention with reference to the drawings.

### <First Structure Example>

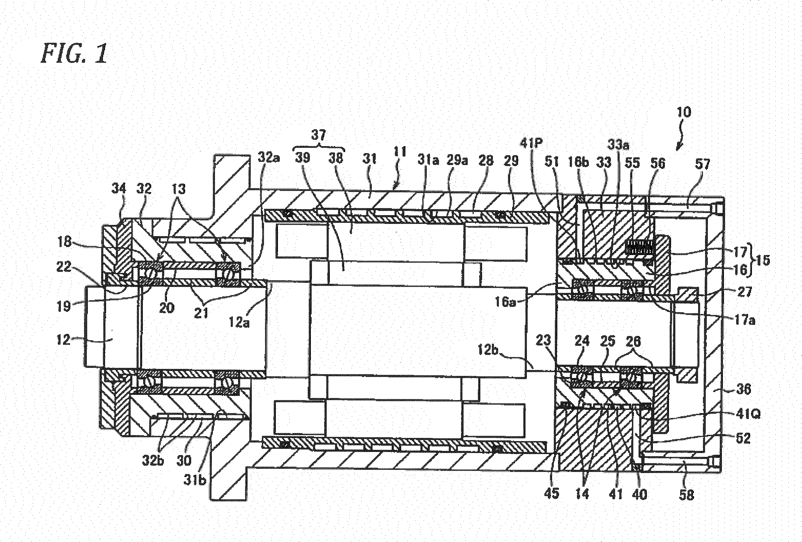

Firstly, description is given of the whole structure of a first structure example of a main spindle apparatus according to the invention with reference to Fig. 1.

A main spindle apparatus 10 includes a housing 11, a rotation shaft 12 having a tool (not shown) mounted on one end (in Fig. 1, the left end) thereof and rotatable relative to the housing 11, a pair of fixed side bearings (in this embodiment, angular ball bearings) 13, 13 arranged on the front end side (in Fig. 1, the left side) of the rotation shaft 12, a pair of free side bearings (in this embodiment, angular ball bearings)) 14, 14 arranged on the rear end side (in Fig. 1, the right side) of the rotation shaft 12, and a sleeve 15 inserted into the housing 11 and slidingly movable in the axial direction.

The housing 11 includes a substantially cylindrical housing main body 31, a front housing 32 engagingly fixed to the front end side of the housing main body 31, and a rear housing 33 engagingly fixed to the rear end side of the housing main body 31. A front cover 34 is fastened and fixed to the front end of the front housing 32, while a rear cover 36 is fastened and fixed to the rear end of the rear housing 33.

A stator 38 of a built-in motor 37 is fixed to a sleeve 29 internally fittable with the inner peripheral surface 31a of the housing main body 31. A rotor 39 is fixed to the axial-direction intermediate part of the rotation shaft 12 while it is opposed to the stator 38. A rotation magnetic field generated by the stator 38 applies a rotation force to the rotor 39, thereby rotationally driving the rotation shaft 12. The sleeve 29 has multiple annular grooves 29a in the outer peripheral surface thereof and, when the sleeve 29 is internally fitted with the housing main body 31, cooling passages 28 are formed between the grooves 29a and inner peripheral surface 31a.

While outer rings 18, 18 are internally engaged with the front housing 32 and inner rings 19, 19 are externally engaged with the rotation shaft 12, the fixed side bearings 13, 13 bear the front end side of the rotation shaft 12 rotatably. The outer rings 18, 18 of the fixed side bearings 13, 13, while being held by the step part 32a of the front housing 32 and front cover 34 through an outer ring spacer 20, are positioned in the axial direction relative to the front housing 32. The inner rings 19, 19, while being held by the front step part 12a of the rotation shaft 12 and a nut 22 threadedly engaged with the rotation shaft 12, are positioned in the axial direction relative to the rotation shaft 12. The front housing 32 has multiple annular grooves in the outer peripheral surface thereof and, when the front housing 32 is internally engaged with the housing main body 31, there are formed cooling passages 30 between the grooves 32b and the inner peripheral surface 31b of the housing main body 31.

The inner peripheral surface 33a of the rear housing 33 is engaged by a substantially cylindrical bearing sleeve 16 movable in the axial direction. Also, on such end face of the bearing sleeve 16 as is opposed to a tool mounting side thereof, there is mounted by a screw (not shown) an outer ring retainer 17 extending outward in the radial direction from the outer peripheral surface of the bearing sleeve 16. Here, the bearing sleeve 16 and outer ring retainer 17 constitute the sleeve 15.

The rear housing 33 includes multiple spring chambers 55 respectively opened in the end face thereof (in Fig. 1, the right side face) on the opposite side to the tool mounting side, while they are opposed to the tool mounting side end face of the flange part of the outer ring retainer 17 extending outward in the radial direction from the bearing sleeve 16. A coil spring 56 is stored into the spring chamber 55 and is interposed between the flange part of the outer ring retainer 17 and spring chamber 55. The coil spring 56 applies an axial direction (in Fig. 1, in the right direction) elastic force to the sleeve 15, thereby applying a fixed pressure preload to the fixed side bearings 13, 13 and free side bearings 14, 14.

While outer rings 23, 23 are internally engaged with the bearing sleeve 16 and inner rings 24, 24 are externally fitted with the rotation shaft 12, the free side bearings 14, 14 bear the rear end side of the rotation shaft 12 rotatably. The outer rings 23, 23 of the free side bearings 14, 14, while being held by the step part 16a of the bearing sleeve 16 and the annular projection part 17a of the outer ring retainer 17 through an outer ring spacer 25, are positioned in the axial direction relative to the bearing sleeve 16. The inner rings 24, 24, while being held by the rear step part 12b of the rotation shaft 12 and a nut 27 threadedly engaged with the rotation shaft 12 through an inner ring spacer 26, are positioned in the axial direction relative to the rotation shaft 12.

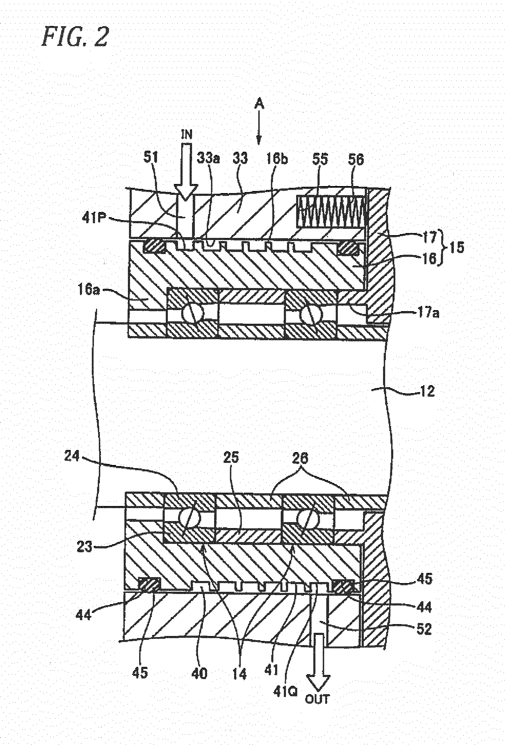

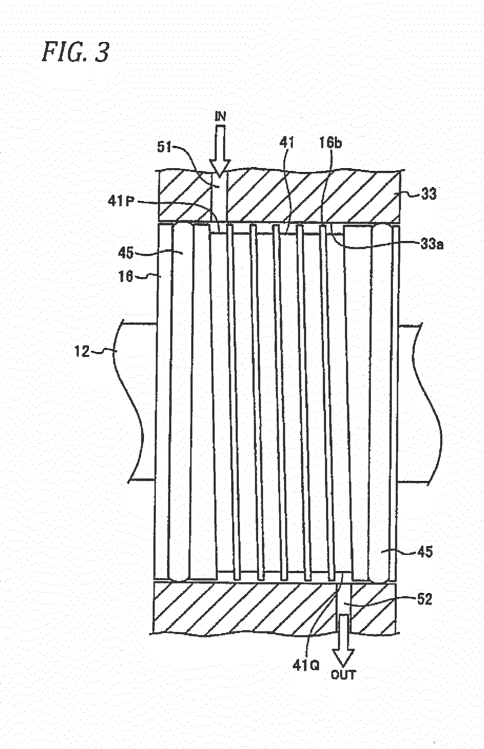

As shown in Figs. 2 and 3, the bearing sleeve 16 has a streak of spiral groove 41 in such portion of the outer peripheral surface 16b as extends from one end side to the other end side in the axial direction. When the sleeve 16 is engaged with the inner peripheral surface 33a of the rear housing 33a, the spiral groove 41 forms a cooling passage 40 between the mutually opposed surfaces, namely, the outer peripheral surface of the bearing sleeve 16 and the inner peripheral surface 33a of the rear housing 33. A cooling medium such as cooling oil flows in this cooling passage 40.

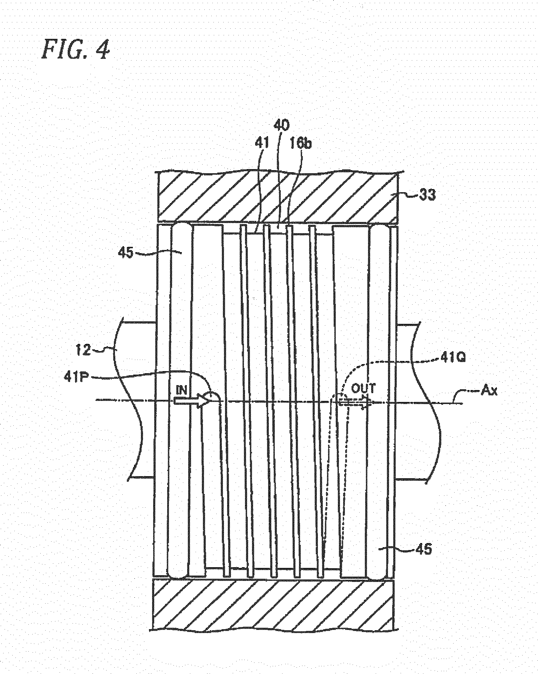

Fig. 4 shows a partial section view of the outer peripheral surface of the bearing sleeve when viewed from the A direction of Fig. 2. As shown in Fig. 4, one end 41P providing the groove start end of the spiral groove 41 and the other end 41Q providing the groove terminal end of the spiral groove 41 are arranged 180° different in phase from each other in the circumferential direction of the bearing sleeve 16. That is, when one end 41P of the spiral groove 41 on the bearing sleeve 16 is viewed from front, the other end 41Q of the spiral groove 41 is arranged to be superimposed on the axis Ax of the bearing sleeve 16.

Also, the rear housing 33 includes, as shown in Fig. 3, a supply port 51 communicating with one end 41P of the spiral groove 41 for receiving a cooling medium, and a discharge port 52 communicating with the other end 41Q of the spiral groove 41 for discharging therefrom the cooling medium having flown through the cooling passage.

Thus, the supply port 51 of a supply passage 57 for supplying the cooling medium into a cooling passage 40 is opened toward one end 41P of the spiral groove 41 situated nearest to the built-in motor 37, while the discharge port 52 of a discharge passage 58 for discharging the cooling medium is opened toward the other end 41Q of the spiral groove 41 most distant from the built-in motor 37 and is formed with the phase 180° different from the supply port 51.

To work the spiral groove 41 of the bearing sleeve 16, firstly, an end mill tool is used to incise the bearing groove 16 from any one of the neighborhoods of the ends thereof in the sleeve axial direction to thereby dig a groove. After then, while maintaining such incision, the end mill tool is fed spirally to work a spiral groove. And, when the end mill tool reaches any one of the other end neighborhoods, the feeding is stopped and the end mill tool is pulled up, thereby finishing the groove.

Generally, working of a spiral groove in a cylindrical member, disadvantageously, is very difficult, is hard to enhance working precision, and requires a high working cost. However, recently, a multiple spindle working machine or a combined working machine has been used widely, thereby enabling easy, high precision and low cost working of the spiral groove 41 of this structure. Thus, for example, a circumferential phase error between the supply port 51 and discharge port 52 can be reduced, thereby enabling uniform cooling.

And, the cooling medium pressure fed from a pump (not shown) is supplied from the supply port 51, flows in the cooling passage 40 and cools the periphery of the cooling passage 40; and, after then, it is discharged from the discharge port 52. Since the cooling medium is supplied from one end 41P near to the built-in motor 37, a part generating a large amount of heat, that is, a part easy to increase in temperature can be cooled by the lower-temperature cooling medium, thereby enabling high-efficiency cooling. Also, since the supply port 51 and discharge port 52 are arranged 180° different from each other in phase in the circumferential direction, the cooling passage 40 provides a symmetric arrangement, thereby enabling more uniform cooling of the free side bearing part. Here, a phase difference between the supply port 51 and discharge port 52 can be changed arbitrarily, for example, they may also be the same phase.

Also, as shown in Fig. 2, the outer peripheral surface 16b of the bearing sleeve 16 has, outwardly of the cooling passage 40 in the axial direction, a pair of annular concave grooves. O rings 45 constituted of elastic members are mounted in the annular concave grooves 44, thereby sealing the fitting part between the inner peripheral surface 33a of the rear housing 33 and bearing sleeve 16. The squeeze of each O ring 43 may preferably be in the range of 0.1 mm ∼ 2.0 mm; and, for easier removal of sliding failure of the bearing sleeve, it may preferably be in the range of 0.2 mm ∼ 0.5 mm. Also, with respect to a fit clearance between the bearing sleeve 16 and rear housing 33, a difference between the diameter dimensions thereof, that is, a dimension represented by [the inside diameter of the rear housing 33 - the outside diameter of the bearing sleeve 16] may preferably be set in the range of 5 µm ∼ 100 µm; and, for easier removal of short clearance and the sliding failure of the bearing sleeve 16 due to the inclination thereof, it may preferably be set in the range of 15 µm - 50 µm.

As the material of the O ring 45, there are selected according to the need, in addition to general nitrile rubber or acrylic rubber, silicone rubber or various elastomers having heat resistance relative to heat generation of a motor built-in spindle, or fluororubber having swelling resistance/oil resistance relative to the cooling medium. Here, a sliding amount between the bearing sleeve 16 and rear housing 33 in this structure is a shift of such degree as escapes from deformation due to a working load or the axial-direction thermal expansion of the spindle, that is, ±0.5 mm or less, at most, ±1 mm or less. Therefore, sealing performance reduction by sliding wear due to large and fast strokes as in a piston ring to be mounted on a movable cylinder part is small and thus material having excellent creep resistance characteristics against aging (heat or initial interference engagement) may preferably be selected.

As shown in Fig. 1, when the main shaft apparatus 10 includes the multiple cooling passages, that is, the cooling passage 30 for cooling the fixed side bearings 13, 13, cooling passage 28 for cooling the stator 38 of the built-in motor 37, and cooling passage 40 for cooling the free side bearings 14, 14, as the optimum cooling of the free side bearings 14, 14, preferably, a cooling apparatus (not shown) may also be provided separately from other cooling passages 28, 30, that is, it may be provided exclusively for the cooling passage 40. Thus, the temperature control of the cooling medium can be made regardless of the conditions of the other cooling passages 28, 30.

However, when it is difficult practically, the cooling apparatus may not be independent but the cooling passage 40 may only be independent. In this case, when a restrictor is provided somewhere in a supply side pipe to the cooling passage to thereby control the supply amount of a cooling medium, the optimum cooling condition can be adjusted.

Here, in the case of a one-passage cooling structure, when there is employed a passage structure in which, after the cooling medium is firstly passed through the cooling passage 28 for cooling the stator 38 tending to generate a large amount heat, the cooling medium is circulated to the cooling passage 40 for cooling the free side bearings 14, 14, the temperature of the whole main spindle apparatus 10 can be lowered more efficiently. Also, in order to cool the temperature of the free side bearings 14, 14 more efficiently, the above passage structure may be reversed and the cooling medium of lower temperature may be firstly circulated to the cooling passage 40. Thus, the circulation order can be selected as necessary.

As described above, according to the main spindle apparatus 10 of this structure example, between the outer peripheral surface 16b of the bearing sleeve 16 and the inner peripheral surface 33a of the rear housing 33, there is formed the cooling passage 40 allowing the cooling medium to flow therethrough. The cooling passage 40 includes a streak of spiral groove 41 formed in such portion of the outer peripheral surface 16b of the bearing sleeve 16 as extends from the axial-direction one end side of the bearing sleeve 16 to the other end side thereof. Thus, the bearing sleeve 16 to be internally engaged by the free side bearings 14, 14 can be cooled directly, thereby enabling efficient cooling of the free side bearings 14, 14.

Use of the spiral groove 41 in the cooling passage 40 enables the cooling medium to flow smoothly along the spiral groove in one direction toward the discharge side, thereby enhancing the heat cooling efficiency. The bearing sleeve 16 is structured such that the cooling medium is supplied from the supply port 51 communicating with one end 41P of the spiral groove 41 and, after having passed through the cooling passage 40, the cooling medium is discharged from the discharge port 52 communicating with the other end 41Q of the spiral groove 41. That is, since the cooling medium supply and discharge passages communicate directly the inside of the spiral groove 41, the cooling medium can flow smoothly through the whole groove from one end of the spiral groove 41 to the other end thereof. As a result, heat exchange can be carried out with excellent efficiency. For example, when compared with a structure in which circumferential annular grooves serving as the supply passage and discharge passage of the cooling medium are formed on both ends of the spiral groove 41, the space of the bearing sleeve 16 in the axial direction can be saved.

Also, since another spiral groove can be formed in the space of the circumferential annular grooves, the cooling passage and cooling heat transmission area can be increased, that is, the groove length can be increased, thereby enabling enhancement in the cooling efficiency. Here, a circumference phase shift between the rear housing 33 and bearing sleeve 16 in assembling can be removed by an existing key member for stopping the rotation of the rear housing 33 and bearing sleeve 16 during rotation, thereby eliminating the need to add a new rotation stop member.

With the above structure, the internal temperatures of the free side bearings 14, 14 are lowered, lubricating oil film cutting due to the lowered viscosity in the rolling contact part and cage guide surface during rotation is hard to occur, and the reduced life due to poor lubrication and the seizure of the free side bearings 14, 14 can be prevented.

Also, since the rear housing 33 and bearing sleeve 16 are both cooled simultaneously, the radial shrinkage amounts thereof are uniform and a clearance in the slide part (a clearance between the rear housing 33 and bearing sleeve 16) is not reduced, thereby enabling prevention of occurrence of sliding failures due to the reduced clearance. Further, since the flow of the cooling medium within the spiral groove 41 is made smooth and the whole bearing sleeve 16 is cooled uniformly, deformation strain due to cooling can be prevented. As a result, strain of the internally engaged free side bearings 14, 14 does not occur either but the rotation precision of the rotation shaft 12 can be maintained at a high level, thereby enabling enhancement in the working precision of the main spindle apparatus 10.

Also, since the cooling oil is always circulating in the slide part, the friction coefficient thereof is small, thereby enabling enhancement in the sliding property thereof. There also exists a method in which a ball guide (ball bush) or the like is arranged in the slide part and the rolling action of the ball guide is used to enhance the sliding property. However, in this method, since the rigidity of the slide part is reduced, thereby causing occurrence of vibrations and reducing the natural frequency of the spindle. Meanwhile, when, for enhancement in the rigidity, a preload clearance (that is, a radial clearance between housing inside diameter, ball and sleeve outside diameter) is increased, adversely, the sliding property is poorer than when it slides with the clearance not increased.

Also, even when initial-stage fletching friction powder is generated between the rear housing 33 and bearing sleeve 16 due to chatter vibration occurring during heavy cutting, the cooling medium carries away slight friction powder to the outside, thereby enabling suppression of further progress of fletching with the friction powder serving as an aid.

Further, since the O rings 45 for sealing liquid tight between the outer peripheral surface 16b of the bearing sleeve 16 and the inner peripheral surface 33a of the rear housing 33 are arranged on both sides of the cooling passage 40 in the axial direction, the cooling medium is prevented against leakage and the damping characteristic of the main spindle apparatus 10 is enhanced by the elasticity of the O rings 45, thereby, particularly, contributing toward enhancing dynamic rigidity having an influence on the working characteristic of a hard-to-be-cut material. Also, there is obtained a damping action due to the damper effect of the cooling medium flowing in the slide part.

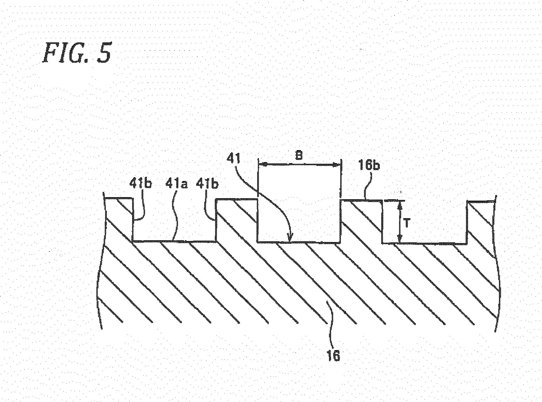

Here, in the above structure example, the spiral groove 41, as shown in Fig. 5, is formed to have a rectangular section shape provided by a bottom surface 41a and side wall surfaces 41b. The sizes of the groove width B and depth T of the spiral groove 41 having a rectangular section shape can be selected properly.

When B>T, since the radial depth of the spiral groove 41 is shallow, the radial thickness of the bearing sleeve 16 can be secured, thereby enabling enhancement in the working precision of the sleeve. Such shape is applied to a case where a serious consideration is laid on the working precision enhancement of the sleeve or a case where the rigidity of the main shaft must be enhanced. Also, when B<T, since the radial depth of the spiral groove 41 is deep, the spiral groove 41 can be formed near to the bearing, thereby enabling higher-efficient cooling of the bearing neighborhood. As a result, the cooling efficiency of the main spindle can be enhanced. Such shape can be applied to a case where a serious consideration is laid on the cooling performance enhancement of the main shaft. When B=T, the above effects can be obtained in good balance.

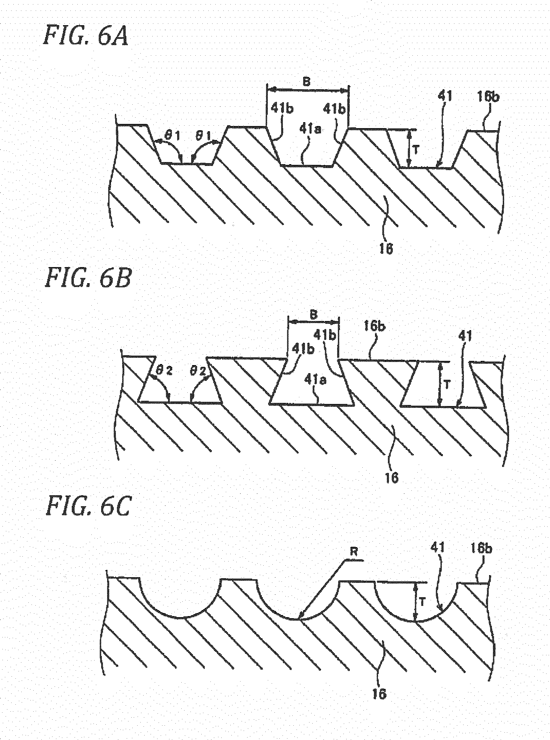

Also, the section shape of the spiral groove 41 can include, besides the rectangular shape, various shapes as shown in Figs. 6A - 6C. For example, as shown in Figs. 6A ∼ 6B, the side wall surface 41b of the spiral groove 41 may also be formed inclined relative to a direction perpendicular to the axial direction, that is, the radial direction.

Specifically, the spiral groove 41 of the bearing sleeve 16 shown in Fig. 6A is a trapezoidal groove in which the groove width B increases gradually from the bottom surface 41a of the spiral groove 41 toward the outer peripheral surface 16b of the bearing sleeve 16. That is, in the trapezoidal spiral groove 41, since the section shape of the spiral groove 41 provides an obtuse angle (θ₁)) between the bottom surface 41a and side wall surface 41b, it has no interference with the inner peripheral surface 33a of the rear housing 33 (see Fig. 1), thereby enabling enhancement in the sliding property. Also, in the spiral groove 41 of the bearing sleeve 16 shown in Fig. 6B, the groove width B reduces gradually from the bottom surface 41a of the spiral groove 41 toward the outer peripheral surface 16b of the bearing sleeve 16, thereby providing a so called dovetail groove. That is, in the dovetail spiral groove 41, since the section shape of the spiral groove 41 provides an acute angle (θ₂) between the bottom surface 41a and side wall surface 41b, the surface area of the neighborhood of the free side bearings 14, 14 (see Fig. 1) serving as the heat generation source is large and thus the heat of the free side bearings 14, 14 can be efficiently transmitted to the cooling medium, thereby enabling enhancement in the cooling performance.

Also, the spiral groove 41 of the bearing sleeve 16 shown in Fig. 6C provides a semicircular section having a radius of curvature R. Therefore, it can be worked by a round-shaped tool and the working wear of the tool is small, thereby enabling enhancement in workability.

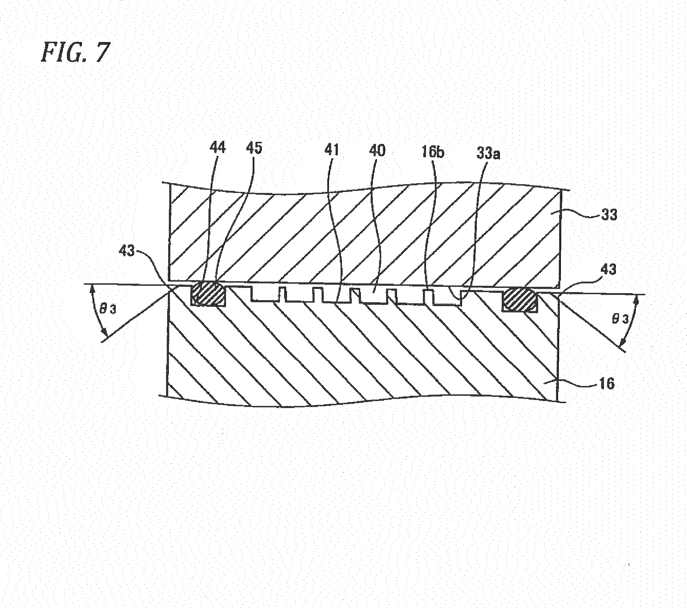

Also, in both end edges of such outer peripheral surface 16b of the bearing sleeve 16 as is opposed to the inner peripheral surface 33a of the rear housing 33, as shown in Fig. 7, there may also be formed chamfer parts 43. The angle θ₃ of the chamfer part 43 relative to the outer peripheral surface 16b, preferably, may be 3° ∼ 45°, more preferably, 3° ∼ 30°. Thus, even when the bearing sleeve 16 is inclined within the rear housing 33, it is prevented against interference with the inner peripheral surface 33a of the rear housing 33, thereby securing the sliding property.

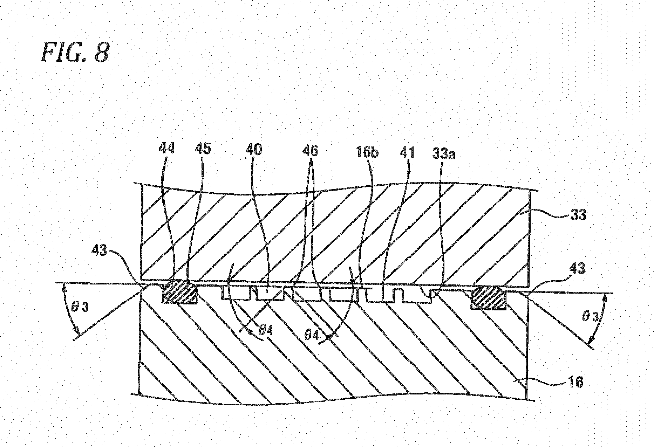

Also, as shown in Fig. 8, when, in addition to the chamfer parts 43 in the two end edges of the bearing sleeve 16, chamfer parts 46 are formed in the top parts (shoulder parts) of the side walls of the spiral groove 41, it is further prevented against interference with the inner peripheral surface 33a of the rear housing 33, thereby maintaining the sliding property.
The angle θ₄ of the chamfer part 43 of the spiral groove 41, preferably, may be 3° ∼ 45°, more preferably, 3° ∼ 30°.

### <Second Structure Example>

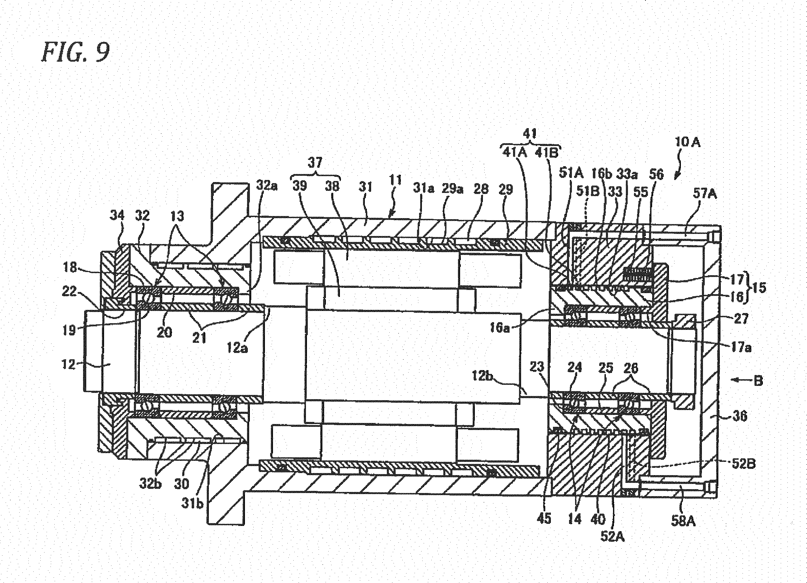

Next, description is given of the whole structure of a second structure example of a main spindle apparatus according to the invention with reference to Figs. 9 ∼ 15. Here, locations and members corresponding to the previously described structure example are given the same designations and thus the description thereof is simplified.

As shown in Figs. 9 ∼ 11, in such location of the outer peripheral surface 16b of the bearing sleeve 16 as extends from one end side of the bearing sleeve 16 to the other end side thereof, there are formed multiple streaks (in the illustrated example, two streaks) of spiral grooves 41. In the spiral groove 41 of this structure, a first spiral groove 41A and a second spiral groove 41B are arranged side by side. When the bearing sleeve 16 is fitted with the inner peripheral surface 33a of the rear housing 33, there is formed a cooling passage 40 between the mutually opposed surfaces, that is, the outer peripheral surface of the bearing sleeve 16 and the inner peripheral surface 33a of the rear housing 33. A cooling medium such as cooling oil flows in this cooling passage 40. To and from the first spiral groove 41A and second spiral groove 41B, cooling mediums are supplied and discharged independently of each other through housing cooling passages by a cooling apparatus (not shown).

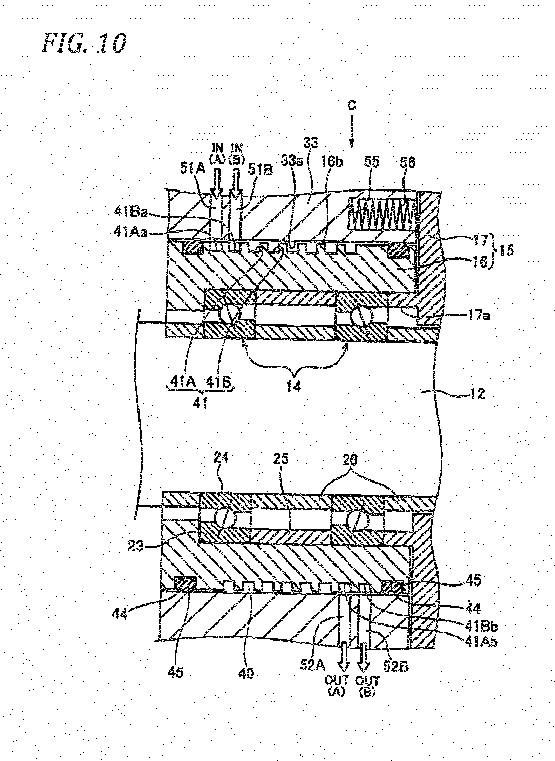

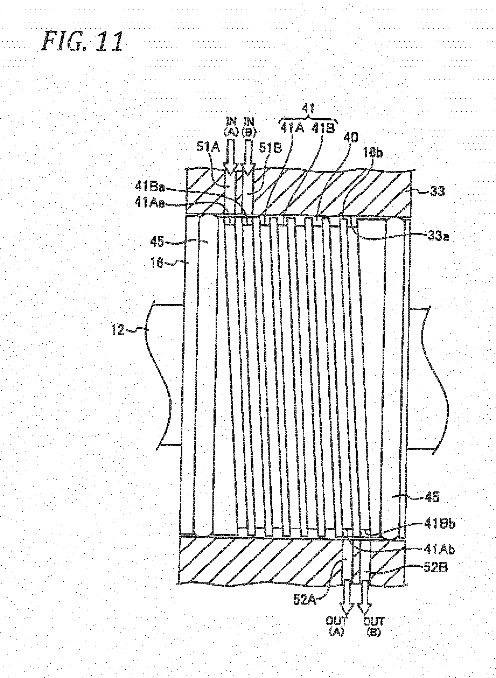

The rear housing 33 shown in Fig. 9 includes: a supply port 51A of a supply passage 57A communicating with one end (serving as the groove start end) of the first spiral groove 41A for supplying a cooling medium into the spiral groove 41A (in Figs. 10 and 11, as shown by the arrow IN (A)); and, a discharge port 52A communicating with the other end (serving as the groove terminal end) of the first spiral groove 41A for discharging the cooling medium having flown through the spiral groove 41A therefrom (in Figs. 10 and 11, as shown by the arrow OUT (A)).

The rear housing 33 further includes: a supply port 51B communicating with one end (serving as the groove start end) of the second spiral groove 41B for receiving a cooling medium therein (in Figs. 10 and 11, as shown by the arrow IN (B)); and, a discharge port 52B communicating with the other end (serving as the groove terminal end) of the second spiral groove 41B for discharging the cooling medium having flown through the spiral groove 41B therefrom (in Figs. 10 and 11, as shown by the arrow OUT (B)).

The supply port 51A opens toward one end 41Aa of the spiral groove 41A situated nearest to the built-in motor 37. The discharge port opens toward the other end 41Ab of the spiral groove 41 most distant from the built-in motor 37 and is 180° different in phase from the supply port 51A in the circumferential direction.

As described above, in the first spiral groove 41A and second spiral groove 41B, the phases in the circumferential direction of one end 41Aa (existing at a position corresponding to the supply port 51A) and 41Ba (existing at a position corresponding to the supply port 51B) may be 0° and 0° (which is hereinafter described as (0° -0°) or may also be (0° -180°); and, the circumferential-direction phase of the other end 41Ab (existing at a position corresponding to the discharge port 52A) and 41Bb (existing at a position corresponding to the supply port 52B) may be (180° -180°) or may also be (0° -180°).

Next, description is given of a case in which the first and second spiral grooves 41A and 41B are formed such that the circumferential-direction phases of one-side ends 41Aa, 41Ba are set for (0° -45°) and the circumferential-direction phases of the other-side ends 41Aa, 41Ba are set for (0° -45°).

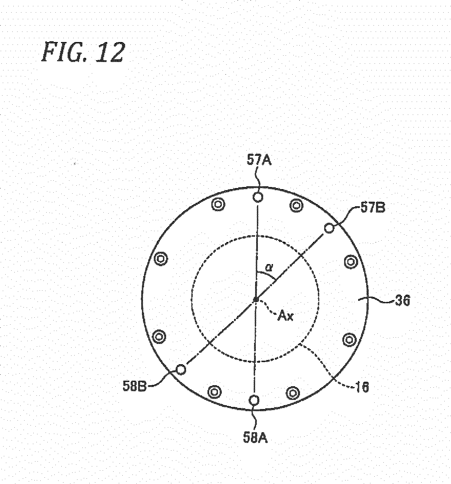

Fig. 12 shows an arrow view taken along the B direction of Fig. 9. In this structure, a supply passage 57A and a discharge passage 58A respectively formed in the rear housing 33 and rear cover 36 are arranged 180° different in phase from each other in the circumferential direction. A supply passage 57B for supplying a cooling medium into the spiral groove 41B is arranged in phase different by an angle α (in the illustrated example, α = 45°) in the circumferential direction with the axis Ax of the bearing sleeve 16 as the center. Also, the discharge passage 58B is arranged 180° different in phase in the circumferential direction with respect to the supply passage 57B.

Similarly to the spiral groove 41A, the supply port 51B (not shown) of the supply passage 57B for supplying a cooling medium to the spiral groove 41B opens toward one end 41Ba of the spiral groove 41B situated nearest to the built-in motor 37. The discharge port 52B (not shown) of the discharge passage 58B for discharging a cooling medium opens toward the other end 41Bb of the spiral groove 41B most distant from the built-in motor 37 and is 180° different in phase from the supply port 51B.

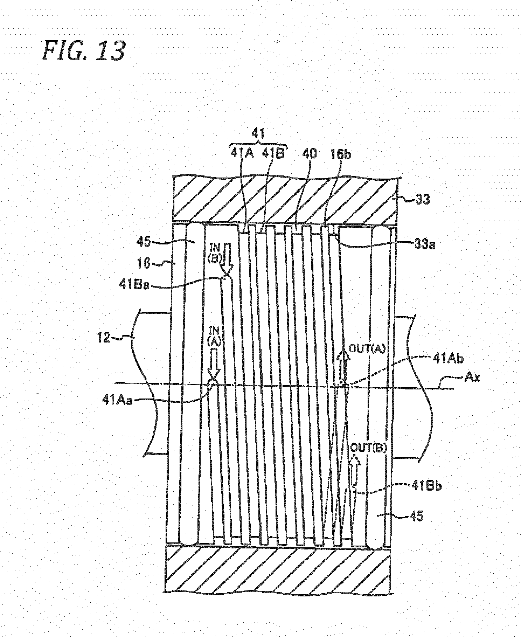

Fig. 13 is a partial section view of the outer peripheral surface of the bearing sleeve when viewed from the C direction of Fig. 10. As described above, one end 41Aa (serving as the groove start end) of the spiral groove 41A and the other end 41Ab (serving as the groove terminal end) of the spiral groove 41A are arranged 180° different in phase from each other in the circumferential direction of the bearing sleeve 16. That is, when one end 41Aa (groove start end) of the spiral groove 41A on the bearing sleeve 16 is viewed in a front view from the axis vertical direction, the other end 41Bb of the spiral groove 41 is arranged at a position superimposed on the axis Ax of the bearing sleeve 16.

And, one end 41Ba (serving as the groove start end) of the spiral groove 41B is arranged different in phase from one end 41Aa of the spiral groove 41A by an angle α (for example, α=45°) in the circumferential direction of the bearing sleeve 16. Also, one end 41 Ba and the other end 41Bb of the spiral groove 41B are arranged 180° different in phase from each other in the circumferential direction of the bearing sleeve 16. Thus, the other end 41Bb of the spiral groove 41B and the other end 41Ab of the spiral groove 41A are arranged different in phase by an angle α in the circumferential direction of the bearing sleeve 16.

Since, with respect to the spiral grooves 41A, 41B, there are supplied and discharged their respective cooling mediums from their independent housing cooling passages, the flow amounts and temperatures of the cooling mediums can be controlled for each of the spiral grooves 41A, 41B, thereby enabling accurate and stable control of the temperature of the bearing sleeve 16 and the temperature of the free side bearings.

Further, the phases of the supply ports 51A, 51B (not shown) of the spiral grooves 41A, 41B and the phases of the discharge ports 52A, 52B (not shown) thereof are respectively set at equal intervals in the circumferential direction, that is, the phase difference between the supply ports 51A, 51B and the phase difference between the discharge ports 52A, 52B are set equal, whereby a cooling effect along the circumference of the bearing sleeve 16 can be averaged and thus the thermal deformation of the periphery of the bearing sleeve 16 by cooling can be uniformed. Thus, main spindle rotation precision can be maintained, occurrence of vibrations can be suppressed and working precision can be enhanced.

Also, one-side ends 41Aa, 41Ba (and the other-side ends 41Ab, 41Bb) of the spiral grooves 41A, 41B may preferably be arranged such that their phases are different by an angle of 45° or less in the circumferential direction of the bearing sleeve 16. Thus, the supply port and discharge port can be arranged with no interference.

To work the spiral groove 41 of the bearing sleeve 16, firstly, an end mill tool is inserted into the bearing sleeve 16 from one of the ends neighborhoods thereof in the sleeve axial direction to cut it in the sleeve radial direction, thereby digging a groove. After then, while keeping this cutting, the end mill tool is fed spirally to work a spiral groove. And, when the tool reaches any one of the other ends neighborhoods in the sleeve axial direction, the feed of the end mill tool is stopped and the end mill tool is pulled up, thereby finishing the groove.

Generally, disadvantageously, it has been very difficult so far to work a spiral groove in a cylindrical member, that is, enhancement in working precision has been hard, and working cost has been high. However, recently, a multiple spindle machine or a combined working machine has been used widely. Thus, with the second structure example, the spiral groove 41 can be worked easily, highly accurately and inexpensively. Accordingly, for example, a circumferential phase error between the supply ports 51A, 51B and discharge ports 52A, 52B can be reduced, thereby enabling uniform cooling.

And, cooling mediums, which are pressure fed from a pump (not shown), are respectively supplied from the supply ports 51A, 51B and are allowed to flow within the cooling passage 40 to thereby cool the periphery of the cooling passage 40, and, after then, are discharged from the discharge ports 52A, 52B respectively. Since the cooling mediums are respectively supplied from the one-side ends 41Aa, 41Ba of the spiral grooves 41A, 41B situated near to the built-in motor 37, a part generating a large amount of heat, that is, a part easy to increase in temperature can be cooled by the cooling medium of lower temperatures, thereby enabling high-efficiency cooling. Also, since the supply ports 51A, 51B (and discharge ports 52A, 52B) are arranged 180° different in phase from each other in the circumferential direction, the cooling passages 40 of the spiral grooves 41A, 41B are allowed to have symmetrical arrangements, thereby enabling further uniform cooling of the free side bearing part.

Here, in this structure, the phase difference between the supply ports 51A, 51B and discharge ports 52A, 52B is set for (0° -45°). However, it can be changed arbitrarily according to the arrangement of peripheral parts, for example, it main also be set for (0°-180°).

Further, the axial groove width of the spiral grooves 41A, 41B may be identical or different. The spiral axial pitch can also be set arbitrarily. Here, in this structure, the motor side is regarded as the supply side of the cooling medium and the main shaft end side is regarded as the discharge side of the cooling medium; however, this is not limitative.

As shown in Fig. 10, the bearing sleeve 16 includes a pair of annular concave grooves 44 in such portion of the outer peripheral surface 16b as exists outward of the cooling passage 40 in the axial direction. In the annular concave grooves 44, there are mounted O rings 45 each constituted of an elastic member, thereby sealing the engaging part between the inner peripheral surface of the rear housing 33 and the bearing sleeve 16. The annular concave grooves 44 and O rings 45 are similar in structure to those of the first structure example.

As described above, according to the main spindle apparatus 10A of this structure, between the outer peripheral surface 16b of the bearing sleeve 16 and the inner peripheral surface 33a of the rear housing 33, there are formed the cooling passages 40 through which the cooling mediums can flow. The cooling passages 40 include multiple streaks of spiral grooves formed in the outer peripheral surface 16b of the bearing sleeve 16. The rear housing 33 includes: multiple supply ports 51A respectively communicating with one-side ends 41Aa, 41Ba of the multiple streaks of spiral grooves for receiving the cooling mediums; and, multiple discharge ports 52A, 52B respectively communicating with the other-side ends 41Ab, 41Bb of the multiple streaks of spiral grooves for discharging the cooling mediums after having flown through the spiral grooves. Thus, the bearing sleeve 16 having the free side bearings 14, 14 internally fitted therewith can be cooled directly, thereby enabling high-efficiency cooling of the free side bearings 14, 14.

Also, use of the multiple streaks of spiral grooves 41A, 41B in the cooling passages 40 allows the cooling mediums to flow smoothly along the spiral grooves in one direction toward the discharge side, thereby enabling enhancement in thermal cooling efficiency. The bearing sleeve 16 is structured such that the cooling mediums are supplied from the supply ports 51A, 51B respectively communicating with one-side ends of the spiral grooves 41A, 41B, and the cooling mediums having flown through the spiral grooves are discharged from the discharge ports 52A, 52B respectively communicating with the other-side ends of the spiral grooves 41A, 41B.

Further, this structure example can also obtain similar operation effects to the first structure example.

For example, the spiral groove 41 of this structure example, as shown in Fig. 5, has a rectangular section shape provided by a bottom surface 41a and two side wall surfaces 41b. The groove width B and depth T of the spiral groove 41 having such rectangular section shape can be selected properly similarly to the first structure example. When B>T, B<T, B=T, there can be obtained similar operation effects to the first structure example.

The section shape of the spiral groove 41, similarly to the first structure example, can include, besides the rectangular shape, various shapes as shown in Figs. 6A ∼ 6C and the respective shapes can provide similar effects to the effects of the first structure example.

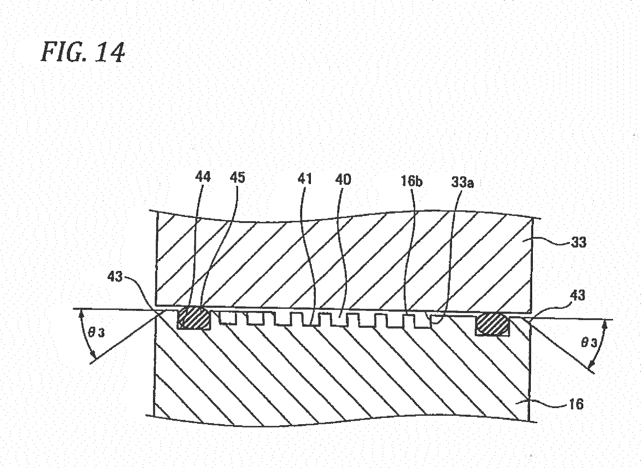

Also, in the two end edges of such outer peripheral surface 16b of the bearing sleeve 16 as is opposed to the inner peripheral surface 33a of the rear housing 33, as shown in Fig. 14, there may also be formed chamfer parts 43. The angle θ₃ of the chamfer part 43 to the outer peripheral surface 16b may preferably be 3° ∼ 45°, more preferably, 3° ∼ 30°. Thus, even when the bearing sleeve 16 is inclined within the rear housing 33, it is prevented against interference with the inner peripheral surface 33a of the rear housing 33, thereby enabling it to secure its sliding performance.

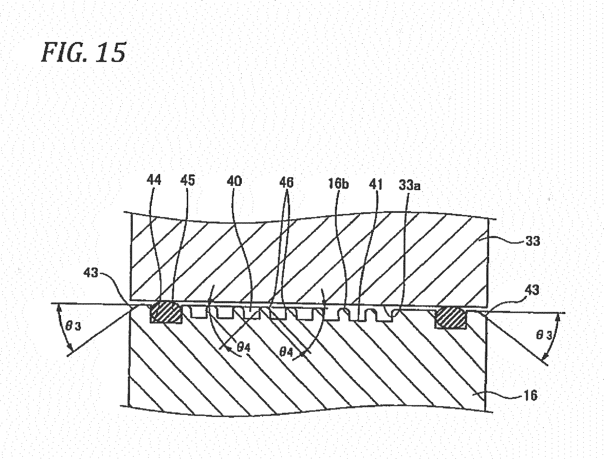

Also, when, as shown in Fig. 15, in addition to the chamfer parts 43 of the two end edges of the bearing sleeve 16, chamfer parts 46 are formed in the top parts (shoulder parts) of the side walls of the spiral grooves 41, the interference of the bearing sleeve 16 with the inner peripheral surface 33a of the rear housing 33 can be prevented further, thereby enabling maintenance of the sliding performance. The chamfer angle θ₄ of the shoulder part of the spiral groove 41 may preferably be 3° - 45°, more preferably, 3° ∼ 30°.

Here, the invention is not limited to the above-mentioned respective structure examples but can also be changed and improved properly.

For example, the axial groove width of the spiral groove may be identical or different. The axial pitch of the spiral shape can also be set arbitrarily. Here, in this structure, the motor side is regarded as the supply side of the cooling medium and the main shaft end side is regarded as the discharge side of the cooling medium, but this is not limitative.

Also, in the above structure example, description has been given of a main spindle apparatus in which a preload is applied between the fixed side bearing and free side bearing with a fixed pressure preload. However, this not limitative but this structure can also be applied to a main spindle apparatus in which fixed position preloads are applied to the fixed side bearing and free side bearing respectively. In this case, similar effects can be obtained. Thus, the free side bearing is not limited to the angular ball bearing but other rolling bearings such as a cylindrical roller bearing may also be applied.

### Embodiment 1

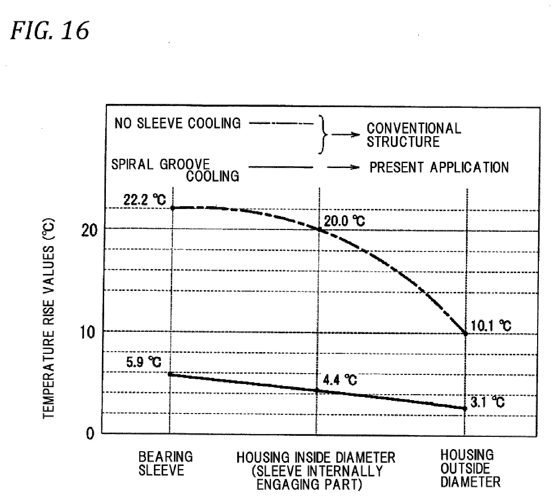

Here, while using the cooling structure of the first structure example including the cooling passages in the outer peripheral surface of the bearing sleeve 16, and a non-cooling structure in which a cooling passage is not formed in the bearing sleeve nor in the rear housing, the temperature rise values from the sleeve inside diameter to the housing outside diameter were compared. Fig. 16 is a graph of the temperature rise values from the sleeve inside diameter to the housing outside diameter obtained by comparing the three cooling structures.

As can be seen obviously from Fig. 16, with respect to the temperature rises in the respective cooling structures, the temperature rise values of the cooling structure of the invention including the cooling passages 40 in the outer peripheral surface of the bearing sleeve 16 are smallest, thereby showing that the main spindle apparatus 10 is cooled with high efficiency. Also, a difference between the temperature rise values of the housing inside diameter (sleeve internal engaging part) and bearing sleeve is small, whereby a decrease in the fitting clearance of the slide part due to the thermal expansion difference can be reduced and thus the excellent sliding performance can be maintained.

Also, since the temperature of the bearing sleeve is about 12°C lower, the bearing temperature becomes lower, thereby enabling maintenance of the base oil viscosity of the lubricant and thus enabling enhancement in oil film formation in the rolling contact part. In the case of grease lubrication, the base oil is made hard to separate from consistency increase agent (oil separation) and flow-out of grease to the outside of the bearing is reduced, thereby enabling extension of grease life.

### Embodiment 2

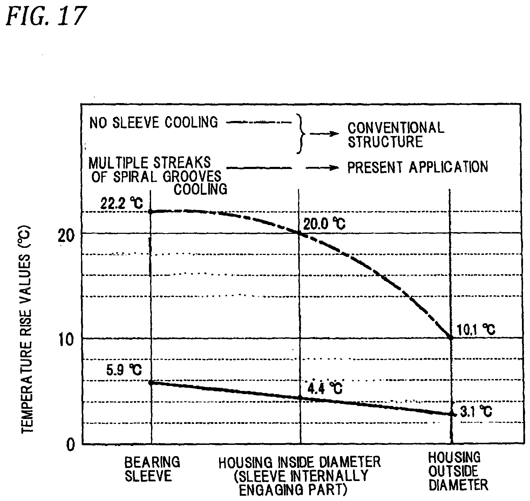

Next, using the cooling structure of the second structure example including the cooling passages in the outer peripheral surface of the bearing sleeve 16, and a non-cooling structure including no cooling passage in the bearing sleeve nor in the rear housing, the temperature rise values from the bearing sleeve inside diameter to the housing outside diameter were compared. Fig. 17 is a graph of the temperature rise values from the sleeve inside diameter to the housing outside diameter obtained by comparing the three cooling structures.

As can be seen obviously from Fig. 17, with respect to the temperature rises in the respective cooling structures, the temperature rise values of the cooling structure of the invention including the cooling passages 40 in the outer peripheral surface of the bearing sleeve 16 are smallest, thereby showing that the main spindle apparatus 10 is cooled with high efficiency. Also, a difference between the temperature rise values of the housing inside diameter (sleeve internal engaging part) and bearing sleeve is small, whereby a decrease in the fitting clearance of the slide part due to the thermal expansion difference can reduced and thus the excellent sliding performance can be maintained.

Also, since the temperature of the bearing sleeve is about 12°C lower, the bearing temperature becomes lower, thereby enabling maintenance of the base oil viscosity of the lubricant and thus enabling enhancement in oil film formation in the rolling contact part. In the case of grease lubrication, the base oil is made hard to separate from consistency increase agent (oil separation) and flow-out of grease to the outside of the bearing is reduced, thereby enabling extension of grease life.

### DESCRIPTION OF REFERENCE NUMERALS AND SIGNS

- 10, 10A:: Main spindle apparatus
- 11 :: Housing
- 12:: Rotation shaft
- 13:: Fixed side bearing
- 14:: Free side bearing
- 16:: Bearing sleeve (sleeve)
- 16b:: Outer peripheral surface of sleeve
- 18, 23:: Outer ring
- 19, 24:: Inner ring
- 28, 30, 40:: Cooling passage
- 31:: Housing main body
- 32:: Front housing
- 33:: Rear housing (housing)
- 33a:: Inner peripheral surface of housing
- 41:: Spiral groove
- 41A:: First spiral groove
- 41B:: Second spiral groove
- 41P:: One end of spiral groove
- 41Q:: The other end of spiral groove
- 41Aa:: One end of first spiral groove
- 41Ab:: The other end of first spiral groove
- 41 Ba:: One end of second spiral groove
- 41 Bb:: The other end of second spiral groove
- 43:: Chamfer part
- 45:: O ring (elastic member)
- 51:: Supply port
- 52:: Discharge port

## Claims

1. A main spindle apparatus (10), comprising:
a housing (11);
a rotation shaft (12) rotatable relative to the housing (11);
a fixed side bearing (13) having an inner ring (19) externally engaged with one end side of the rotation shaft (12) and an outer ring (18) fixed to the housing (11);
a sleeve (16) arranged within the housing (11) on the other end side of the rotation shaft (12) and movable in the axial direction of the rotation shaft (12); and
a free side bearing (14) having an inner ring (24) externally engaged with the other end side of the rotation shaft (12) and an outer ring (23) internally engaged with the sleeve (16), **characterized in that:**
a cooling passage (40), allowing a cooling medium to flow therethrough, is formed between the outer peripheral surface (16b) of the sleeve (16) and the inner peripheral surface (33a) of the housing (11), the outer and inner peripheral surfaces (16b, 33a) being opposed to each other;
the cooling passage (40) is constituted of at least one streak of a spiral groove (41) formed in such portion of the outer peripheral surface (16b) of the sleeve (16) as extends from the axial-direction one end side of the sleeve (16) to the other end side thereof; and
the housing (11) includes a supply port (51) communicating with one end (41P) of the spiral groove (41) configured to receive the cooling medium and a discharge port (52) communicating with the other end (41Q) of the spiral groove (41) configured to discharge therefrom the cooling medium having flown through the cooling passage (40).

2. The main spindle apparatus (10) according to claim 1, **characterized in that**
the cooling passage (40) is constituted of multiple streaks of spiral grooves (41A, 41B) formed in such portion of the outer peripheral surface (16b) of the sleeve (16) as extends from the axial-direction one end side of the sleeve (16) to the other end side thereof; and **in that**
the housing (11) includes multiple supply ports (51A, 51B) respectively communicating with one-side ends of their associated spiral grooves (41A, 41B) configured to receive their associated cooling mediums and multiple discharge ports (52A, 52B) respectively communicating with the other-side ends of their associated spiral grooves (41A, 41B) configured to discharge therefrom the cooling mediums having flown through the spiral grooves (41A, 41B).

3. The main spindle apparatus (10) according to Claim 2, **characterized in that**
the multiple streaks of spiral grooves (41A, 41B) are arranged such that the one-end sides and the other-end sides thereof are arranged different in phase from each other by an angle of 45° or less in the peripheral direction of the outer peripheral surface (16b) of the sleeve (16).

4. The main spindle apparatus (10) according to any one of Claims 1 to 3, **characterized in that**
an annular elastic member (45), configured to seal liquid tight between the outer peripheral surface (16b) of the sleeve (16) and the inner peripheral surface (33a) of the housing (11), is arranged on each of the two axial-end-sides of the cooling passage (40).

5. The main spindle apparatus (10) according to any one of Claims 1 to 4, **characterized in that**
chamfer parts (43) are formed in the two end edges of the outer peripheral surface (16b) of the sleeve (16) opposed to the inner peripheral surface (33a) of the housing (11), or in the two end edges of the inner peripheral surface (33a) of the housing (11).

6. The main spindle apparatus (10) according to any one of Claims 1 to 5, **characterized in that**
the side wall surface of the spiral groove (41) is inclined relative to a direction perpendicular to the above axial direction.

7. The main spindle apparatus (10) according to any one of Claims 1 to 6, **characterized in that**
the spiral groove (41) is arranged such that one end (41P) and the other end (41Q) thereof are shifted 180° in phase from each other in the peripheral direction of the outer peripheral surface (16b) of the sleeve (16).

## Patentansprüche

1. Hauptspindel-Vorrichtung (10), die umfasst:
ein Gehäuse (11);
eine Drehwelle (12), die relativ zu dem Gehäuse (11) gedreht werden kann;
ein Lager (13) einer festen Seite, das einen Innenring (19), der außen mit einer Endseite der Drehwelle (12) in Eingriff ist, sowie einen Außenring (18) hat, der an dem Gehäuse (11) befestigt ist;
eine Buchse (16), die in dem Gehäuse (11) an der anderen Endseite der Drehwelle (12) angeordnet ist und in der axialen Richtung der Drehwelle (12) bewegt werden kann; sowie
ein Lager (14) einer freien Seite, das einen Innenring (24), der außen mit der anderen Endseite der Drehwelle (12) in Eingriff ist, sowie einen Außenring (23) hat, der innen mit der Buchse (16) in Eingriff ist; **dadurch gekennzeichnet, dass**
ein Kühl-Kanal (40), durch den ein Kühlmedium fließen kann, zwischen der Außenumfangsfläche (16b) der Buchse (16) und der Innenumfangsfläche (33a) des Gehäuses (11) ausgebildet ist, wobei die Außen- und die Innenumfangsfläche (16b, 33a) einander gegenüberliegen;
der Kühl-Kanal (40) durch wenigstens eine Bahn einer Spiralnut (41) gebildet wird, die in einem Abschnitt der Außenumfangsfläche (16b) der Buchse (16) ausgebildet ist, der von der einen Endseite der Buchse (16) in axialer Richtung zu der anderen Endseite derselben verläuft; und
das Gehäuse (11) einen Zuleitanschluss (51), der mit einem Ende (41P) der Spiralnut (41) in Verbindung steht und zum Aufnehmen des Kühlmediums eingerichtet ist, sowie einen Ableitanschluss (52) einschließt, der mit dem anderen Ende (41Q) der Spiralnut (41) in Verbindung steht und zum Ableiten des Kühlmediums daraus eingerichtet ist, das durch den Kühl-Kanal (40) geflossen ist.

2. Hauptspindel-Vorrichtung (10) nach Anspruch 1, **dadurch gekennzeichnet, dass**
der Kühl-Kanal (40) durch mehrere Bahnen von Spiralnuten (41A, 41B) gebildet wird, die in einem Abschnitt der Außenumfangsfläche (16b) der Buchse (16) ausgebildet sind, der von der einen Endseite der Buchse (16) in axialer Richtung zu der anderen Endseite derselben verläuft; und dadurch, dass
das Gehäuse (11) mehrere Zuleitanschlüsse (51A, 51B), die jeweils mit Enden einer Seite ihrer zugehörigen Spiralnuten (41A, 41B) in Verbindung stehen und zum Aufnehmen ihrer zugehörigen Kühlmedien eingerichtet sind, sowie mehrere Ableitanschlüsse (52A, 52B) einschließt, die jeweils mit Enden der anderen Seite ihrer zugehörigen Spiralnuten (41A, 41B) in Verbindung stehen und zum Ableiten der Kühlmedien daraus eingerichtet sind, die durch die Spiralnuten (41A, 41B) geflossen sind.

3. Hauptspindel-Vorrichtung (10) nach Anspruch 2, **dadurch gekennzeichnet, dass**
die mehreren Bahnen von Spiralnuten (41A, 41B) so angeordnet sind, dass die Seiten des einen Endes und die Seiten des anderen Endes derselben in der Umfangsrichtung der Außenumfangsfläche (16b) der Buchse (16) mit einem Phasenunterschied eines Winkels von 45° oder weniger angeordnet sind.

4. Hauptspindel-Vorrichtung (10) nach einem der Ansprüche 1 bis 3, **dadurch gekennzeichnet, dass**
ein ringförmiges elastisches Element (45), das so eingerichtet ist, dass es flüssigkeitsundurchlässig zwischen der Außenumfangsfläche (16b) der Buchse (16) und der Innenumfangsfläche (33a) des Gehäuses (11) abdichtet, an jeder der zwei axialen Endseiten des Kühl-Kanals (40) angeordnet ist.

5. Hauptspindel-Vorrichtung (10) nach einem der Ansprüche 1 bis 4, **dadurch gekennzeichnet, dass**
angefaste Teile (43) an den zwei Endkanten der Außenumfangsfläche (16b) der Buchse (16) der Innenumfangsfläche (33a) des Gehäuses (11) gegenüberliegend oder an den zwei Endkanten der Innenumfangsfläche (33a) des Gehäuses (11) ausgebildet sind.

6. Hauptspindel-Vorrichtung (10) nach einem der Ansprüche 1 bis 5, **dadurch gekennzeichnet, dass**
die Seitenwandfläche der Spiralnut (41) relativ zu einer Richtung senkrecht zu der axialen Richtung geneigt ist.

7. Hauptspindel-Vorrichtung (10) nach einem der Ansprüche 1 bis 6, **dadurch gekennzeichnet, dass**
die Spiralnut (41) so angeordnet ist, dass ein Ende (41P) und das andere Ende (41Q) derselben in der Umfangsrichtung der Außenumfangsfläche (16b) der Buchse (16) um 180° phasenversetzt zueinander sind.

## Revendications

1. Appareil à mandrin principal (10), comprenant :
un boîtier (11) ;
un axe de rotation (12) qui peut tourner par rapport au boîtier (11) ;
un palier latéral fixe (13) comportant un anneau interne (19) agencé à l'extérieur avec un côté d'extrémité de l'axe de rotation (12) et un anneau externe (18) fixé au boîtier (11) ;
un manchon (16) agencé dans le boîtier (11) sur le côté de l'autre extrémité de l'axe de rotation (12) et déplaçable en direction axiale de l'axe de rotation (12) ; et
un palier côté libre (14) comportant un anneau interne (24) agencé à l'extérieur avec le côté de l'autre extrémité de l'axe de rotation (12) et un anneau externe (23) engagé à l'intérieur avec le manchon (16), **caractérisé en ce que** :
un passage de refroidissement (40), à travers lequel peut s'écouler un fluide de refroidissement, est formé entre la surface périphérique externe (16b) du manchon (16) et la surface périphérique interne (33a) du boîtier (11), les surfaces périphériques externe et interne (16b, 33a) étant opposées entre elles ;
le passage de refroidissement (40) est constitué par au moins une rayure d'une rainure en spirale (41) formée dans une portion de la surface périphérique externe (16b) du manchon (16) telle qu'elle s'étend dudit côté d'une extrémité en direction axiale du manchon (16) vers son côté de l'autre extrémité ; et
le boîtier (11) comprend un orifice d'alimentation (51) communiquant avec une extrémité (41P) de la rainure en spirale (41) configurée pour recevoir le fluide de refroidissement et un orifice de refoulement (52) communiquant avec l'autre extrémité (41Q) de la rainure en spirale (41) configurée pour refouler le fluide de refroidissement qui s'est écoulé à travers le passage de refroidissement (40).

2. Appareil à mandrin principal (101) selon la revendication 1, **caractérisé en ce que**
le passage de refroidissement (40) est constitué d'une multitude de rayures de rainures en spirale (41A, 41B) formées dans une portion de la surface périphérique externe (16b) du manchon (16) telle qu'elle s'étend du côté d'une extrémité en direction axiale du manchon (16) vers son côté de l'autre extrémité ; et **en ce que**
le boîtier (11) comprend de multiples orifices d'alimentation (51A, 51B) qui communiquent respectivement avec des extrémités d'un côté de leurs rainures en spirale associées (41A, 41B) configurées pour recevoir leurs fluides de refroidissement associés et de multiples orifices de refoulement (52A, 52B) qui communiquent respectivement avec les extrémités de l'autre côté de leurs rainures en spirale associées (41A, 41B) configurées pour refouler les fluides de refroidissement qui se sont écoulés à travers les rainures en spirale (41A, 41B).

3. Appareil à mandrin principal (101) selon la revendication 2, **caractérisé en ce que**
les multiples rayures de rainures en spirale (41A, 41B) sont agencées de telle sorte que leurs côtés d'une extrémité et leurs côtés de l'autre extrémité sont agencés avec une phase différant d'un angle inférieur ou égal à 45° en direction périphérique de la surface périphérique externe (16b) du manchon (16).

4. Appareil à mandrin principal (101) selon l'une quelconque des revendications 1 à 3, **caractérisé en ce que**
un élément élastique annulaire (45), configuré pour établir une étanchéité liquide entre la surface périphérique externe (16b) du manchon (16) et la surface périphérique interne (33a) du boîtier (11), est agencé sur chacun des deux côtés d'extrémité axiale du passage de refroidissement (40).

5. Appareil à mandrin principal (101) selon l'une quelconque des revendications 1 à 4, **caractérisé en ce que**
des parties chanfreinées (43) sont formées dans les deux bords d'extrémité de la surface périphérique externe (16b) du manchon (16) opposée à la surface périphérique interne (33a) du boîtier (11), ou dans les deux bords d'extrémité de la surface périphérique interne (33a) du boîtier (11).

6. Appareil à mandrin principal (101) selon l'une quelconque des revendications 1 à 5, **caractérisé en ce que**
la surface de paroi latérale de la rainure en spirale (41) est inclinée par rapport à une direction perpendiculaire à la direction axiale supérieure.

7. Appareil à mandrin principal (101) selon l'une quelconque des revendications 1 à 6, **caractérisé en ce que**
la rainure en spirale (41) est agencée de telle sorte qu'une de ses extrémités (41P) et l'autre de ses extrémités (41Q) sont décalées en phase de 180° l'une par rapport à l'autre en direction périphérique de la surface périphérique externe (16b) du manchon (16).
